# EUROPEAN PATENT APPLICATION

(11) **EP 4 516 471 A1**
(43) Date of publication of application: **05.03.2025**
(21) Application number: 24195610.1
(22) Date of filing: 21.08.2024
(51) Int. Cl.: B27M 1/08, B23D 59/00, B23Q 11/00

(54) **METHOD FOR REGULATING A NEGATIVE PRESSURE FLOW RATE IN A WOODWORKING MACHINE**

(30) Priority: 30.08.2023 IT 202300017826
(71) Applicant: SCM Group S.p.A., 47921 Rimini (RN) (IT)
(72) Inventor: SEVERINI, Cesare, 47921 Rimini (IT); FERRI, Mirko, 47921 Rimini (IT); MAZZA, Michele, 47921 Rimini (IT); BAGGIARINI, Elia, 47921 Rimini (IT)
(74) Representative: Gallo, Gianluca

(57) **Abstract**

This invention relates to a method for regulating a negative pressure flow rate in a machine for machining wood. The method comprises the step of: providing the machine with a work table configured to support and hold down a panel to be machined, a suction system having a negative pressure flow rate and configured to extract the shavings produced by the machine during machining of the panel, a flow regulator for regulating the negative pressure flow rate of the suction system, and a control unit connected to the regulator to control it; generating information relating to a plurality of working conditions of the machine; machining the panel; controlling the regulator to regulate the negative pressure flow rate of the suction system as a function of the information relating to the plurality of working conditions of the machine. This invention also relates to a machine for machining wood and comprising a control unit configured to carry out the method.

## Description

This invention relates to a method for regulating a negative pressure flow rate of a suction system of a machine for machining wood or comparable materials, such as, for example, wood by-products, aluminium, plastic and composites.

This invention also relates to a machine for machining wood, configured and programmed to carry out the method described herein.

More precisely, this invention relates to a Computer Numerical Control (CNC) machine, also called machining centre (MC for short). In particular, described herein are a MC for what is known as "nesting machining" (nesting MC for short) and a method for regulating the negative pressure flow rate of its suction system, which is configured to extract the shavings produced by the nesting MC during the machining of a panel.

Hereinafter in this disclosure, reference is made mainly to a machine for machining wood, in particular a nesting MC having an uninterrupted work table for supporting the panel to be machined, a vacuum pump fluid-dynamically connected to the work table and configured to hold the panel on the work table, and a sacrificial panel placed between the work table and the panel to be machined. However, it should be borne in mind that the machine for machining wood according to this invention might have an interrupted work table, while remaining within the scope of protection defined by the appended claims. In effect, the machine for machining wood according to this invention might, for example, have a work table comprising bars with a system for holding down the workpiece to be machined using, for example, clamps or suction cups, a multi-stage work table, a work table with a conveyor belt or a work table with a movement chain. Moreover, the method of this invention for regulating the negative flow rate might be applied to machines for machining wood having different types of worktables, while remaining within the scope of protection defined by the appended claims.

Nesting is a method of organizing machining processes to allow obtaining the highest number of parts from a single large shape. Thanks to suitable software, this machining method thus allows placing as many parts as possible, the final parts required, in a limited space represented by the starting panel, with the aim of minimizing the amount of scrap (or waste) of raw material, that is, of the starting panel, or of reducing the time needed to make the final parts. Typically, these two aims represent a technological compromise. In the case where the cutting pattern reproduced by the nesting MC on the panel to be machined has only straight cuts, nesting machining may be likened to panel sawing, where a single large panel is cut into a multiplicity of rectangular parts, widely used in the furniture industry to make what are known as "cabinets", which are the basic blocks used for the manufacture of kitchen furniture, or other pieces of furniture. As is known, nesting MCs have a work table, also called "multifunction table", i.e. an uninterrupted work table, typically made of aluminium, designed to support the panel to be machined. Placed between the panel to be machined and the multifunction table there is a panel, known as "sacrificial" panel, typically made of medium density fibreboard (MDF), whose purpose is to protect the multifunction table during machining which involves cutting through the panel to be machined. The multifunction table has a series of openings or holes which allow the top surface of the multifunction table to be placed in fluid-dynamic communication with one or more vacuum pumps, or volumetric pumps. The sacrificial panel is permeable to air, so the negative pressure generated by the volumetric pump acts on the panel to be machined to hold it firmly against the multifunction table.

Nesting MCs are also provided with a machining unit which is movable, typically along three Cartesian axes which define the axes X, Y and Z of the MC. The machining unit typically comprises a chuck to which a machining tool is removably coupled. The machining tool, rotating on the chuck (for example, an electric chuck) can machine the panel by stock removal.

Besides the tools, the chuck can also support tool units (also called aggregates) such as, for example, right-angle tools, sawing units or other machining means which are more complex, and often more cumbersome, than a tool.

Hereinafter in this disclosure, reference is made mainly to a tool coupled to the chuck. However, it should be borne in mind that, as stated, the chuck may support a tool or a tool unit in a perfectly interchangeable manner. The tool may be movable relative to the multifunction table according to one or more rotary axes: for example, two rotary axes called B and C. In this particular case, the tool is movable as a whole relative to the multifunction table according to five axes: three Cartesian axes (X, Y, Z) and two rotary axes (B, C).

In order to extract the shavings produced by the tool during machining of the panel, the machining unit comprises a suction system which in turn comprises an extractor (also called "hood"), for extracting the shavings. During its operation, the hood is operatively in contact with the multifunction table so as to completely surround the tool to create a shavings suction chamber. The hood has the purpose of intercepting and capturing the shavings ejected by the tool so as to stop them and hold them within. The hood is fluid dynamically connected to a negative pressure source, for example, a centrifugal pump, which generates a negative pressure inside it. The fluid-dynamic connection is typically embodied by a pipe (also called "duct"), for example, a corrugated, flexible plastic hose or a smooth, rigid metal pipe. Thanks to the negative pressure inside the hood, the shavings produced by the tool are extracted by suction through the pipe, which places the hood itself in fluid-dynamic communication with the negative pressure source.

Figure 1 of patent document EP3427895A2 shows an example of a shavings suction system according to the prior art, where a suction hood is associable with a spindle which rotationally supports a tool for machining a workpiece made of wood or comparable material. The spindle is in turn rotatable about a first axis of rotation and a second axis of rotation and is movable by means which support and move it on the work table along three Cartesian axes.

The prior art suction system is turned on before, or just before, machining starts and is turned off when machining ends. During the machining process, the suction system has a predefined negative pressure flow rate. It is evident that the suction system of the prior art has only two operating modes: on and off.

The value of the negative pressure flow rate is predefined to ensure that suction can extract the shavings correctly. Taking into account the inefficiency of suction hoods, a suction level for correctly extracting the shavings typically requires a very large amount of energy to produce the negative pressure flow rate suitable for the purpose.

In effect, a suction level unsuitable for efficient extraction of shavings may lead to the presence of shavings (dirt) on the panel to be machined and, in particular, on finished parts. Wooden shavings, as well as swarf of other materials machined (or machinable by the MC), may be dangerous to people and to the surrounding environment and may cause accidents (wooden shavings, for example, are highly inflammable). It is therefore very risky for shavings produced during machining to not be collected and extracted correctly. In addition, the shavings might spoil what is known as the "aesthetic surface" of the finished parts, especially when automatic means are used to unload the parts.

However, besides being economically disadvantageous, a very strong negative pressure inside the hood of the suction system might interfere with the panel to be machined, making it less stable on the multifunction table.

Furthermore, a very strong negative pressure inside the hood might interfere with the parts being machined, which might move out of place, thereby compromising the final quality of the parts themselves.

The aim of this disclosure is to provide a method for regulating a negative pressure flow rate in a machine for machining wood and a machine to overcome the above mentioned disadvantages of the prior art.

This aim is fully achieved by the method for regulating a negative pressure flow rate in a machine for machining wood and by the machine of this disclosure, as characterized in the appended claims.

This disclosure provides a method for regulating a flow rate in a machine for machining wood.

In particular, according to the invention, the method for regulating a negative pressure flow rate in a machine for machining wood may comprise providing the machine with a work table configured to support and hold down a panel to be machined. The work table may be, for example, an uninterrupted table, a multifunction table or other type of table such as, for example, a table comprising bars. The work table may be horizontal, vertical or inclined. Further, according to the invention, the method may comprise providing the machine with the suction system having the negative pressure flow rate and configured to extract shavings produced by the machine during machining of the panel. Additionally, according to the invention, the method may comprise providing the machine with a flow regulator (or regulator) to regulate the negative pressure flow rate of the suction system, and more particularly, inside the hood (or hoods) present in the suction system. For example, the regulator may be a valve (for example, a butterfly valve), a choke or a diverter. Furthermore, the regulator may be configured to regulate the negative pressure source, which is fluid-dynamically connected to the suction system, so as to vary, or regulate, the negative pressure flow rate produced in the suction system, and more particularly, inside the hood (or hoods) present in the suction system. Preferably, according to the invention, the method may comprise providing a control unit which is connected to the regulator to control it. The control unit may comprise a PC (for example, industrial), a CNC and/or any electronic system, concentrated or distributed in the machine, to control the machine itself. By "control the machine" is meant both high-level control, accomplished, for example, through PC, and low-level control, often accomplished through CNC or other electronic control devices (such as I/O cards, etc.). By "high-level control" is meant functions such as, for example, man/machine interface, generation of machining programs (for example, generation of Computer-Aided Manufacturing - CAM - programs from Computer Aided Design - CAD - drawings), connections to external networks, data importation, running of CAD programs to generate CAD drawings. By "low-level control" is meant functions to control the machine directly, such as, for example, interface and management of sensors, servomotor control, actuator control, machine safety management, running of CAM programs (for example, G-CODE).

In particular, according to the invention, the method may comprise, through the control unit, generating information relating to a plurality of working conditions of the machine and, under the control of the control unit, machining the panel. Generating information relating to a plurality of working conditions may occur before the machining of the panel and/or during the machining of the panel. Furthermore, generating information relating to a plurality of working conditions may occur once only, may occur several times, or may be repeated continuously, for example, before the machining of the panel and/or during a part or the whole of the panel machining period. During the machining of the panel, the method may comprise, via the control unit, controlling the regulator to regulate the negative pressure flow rate of the suction system as a function of the information relating to the plurality of working conditions of the machine. Control may be open-loop control (i.e. drive or control without feedback), or it may be closed-loop control (i.e. control with feedback). In the latter case, the method may comprise providing a sensor, for example, a flow sensor, to create a closed-loop control system. The flow sensor may detect the negative pressure flow rate in the suction system, more particularly inside the suction hood or hoods, so as to provide the control unit with a feedback signal. The control unit, during the machining of the panel, may control the regulator so as to make the negative pressure flow rate, measured (for example, continuously) by the flow sensor, tend towards the desired negative pressure flow rate value determined, for example, at a given time, as a function of the information relating to a working configuration of the plurality of working configurations of the machine. Furthermore, the control unit, during the machining of the panel, may control the regulator so as to set the negative pressure flow rate to the desired negative pressure flow rate value determined, for example, at a given time, as a function of the information relating to a working configuration of the plurality of working configurations of the machine. Preferably, according to the invention, the method may comprise the step, via the control unit, of acquiring information relating to a desired machine process to be performed on the panel. Acquisition may be accomplished by an operator programming the machine by locally or remotely importing a CAD drawing, for example, representing the desired machining process, or in other known ways. The information relating to the plurality of working conditions of the machine may be generated as a function of the information relating to the desired machine process.

More preferably, according to the invention, the information relating to the desired machine process may comprise information regarding a plurality of tool positions relative to the work table and the information relating to the plurality of working conditions of the machine may be generated as a function of the plurality of tool positions relative to the work table. In particular, the plurality of tool positions relative to the work table may be the tool path which is generated, for example, by the CAM program from the information contained in the CAD drawing. The tool path may be contained in the G-CODE which may be run by the nesting MC to perform the desired machining process. That way, the negative pressure flow rate may be regulated based on the information relating to the position adopted by the tool, for example, relative to the work table, during machining. Furthermore, according to the invention, the information relating to the desired machine process may comprise information regarding a plurality of parts to be separated from the panel, and the information relating to the plurality of working conditions of the machine may be generated as a function of the plurality of parts to be separated from the panel. For example, the information contained in the CAD drawing may represent a cutting pattern to be made on the panel, in particular a nesting cutting pattern to make a plurality of parts from the panel.

In particular, the information relating to the desired machine process may comprise information regarding a size of a part of the plurality of parts to be separated from the panel, and the information relating to a working condition of the plurality of working conditions of the machine is generated as a function of the size of the part of the plurality of parts to be separated from the panel. For example, the information contained in the CAD drawing may represent a cutting pattern to be made on the panel, from which it is possible to derive the number of parts to be made from the panel and the size of each part. By "size" is meant any measurement which determines the extent of a body (in the case of the machining of a panel, for example, that means in particular, the dimensions measurable in a plan view of the panel) such as, for example, the length of each side (for rectangular parts, for example) the surface area of the large face of the part (for circular parts, for example), the perimeter or any other dimension of the part. That way, the negative pressure flow rate may be regulated based on the information regarding one or more dimensions of the part which the tool is separating from the panel.

More particularly, according to the invention, the information relating to the desired machine process may comprise information regarding a shape of a part of the plurality of parts to be separated from the panel, and the information relating to a working condition of the plurality of working conditions of the machine may be generated as a function of the shape of the part of the plurality of parts to be separated from the panel. For example, the information contained in the CAD drawing may represent a cutting pattern to be made on the panel, from which it is possible to derive the shape of each part to be made. By "shape" is meant the outer appearance presented by each part (in the case of the machining of a panel, for example, that means in particular, the visible aspect in a plan view of the panel) such as, for example, circular, square, oval, spherical, regular or irregular. That way, the negative pressure flow rate may be regulated based on the information regarding the shape of the part which the tool is separating from the panel.

Furthermore, according to the invention, the information relating to the desired machine process may comprise information regarding a plurality of tool positions relative to a part of the plurality of parts to be separated from the panel, and the information relating to a working condition of the plurality of working conditions of the machine may be generated as a function of the plurality of tool positions relative to a part of the plurality of parts to be separated from the panel. For example, the information relating to a working condition of the plurality of working conditions may be generated as a function of the tool path to separate a part of the plurality of parts from the panel, in particular, different information may be generated (relating to different working conditions) depending on whether the tool is at the beginning or the end of the tool path relative to the tool path as a whole for separating the part from the panel.

Additionally, the method according to the invention may comprise the step, via the control unit and during the machining of the panel, of acquiring information relating to a state of the machine. Additionally, the information relating to the plurality of working conditions of the machine may be generated as a function of the information relating to a state of the machine. For example, different sensors may be used to determine a state of the machine, such as, for example, position sensors for the movable machine elements, safety sensors, flow sensors for detecting the flow rate of the fluid-dynamic circuits of the machine, temperature sensors for detecting the ambient temperature or the temperature of machine components.

In particular, according to the invention, the information relating to the state of the machine may comprise information relating to the hold-down force by which the panel is held on the work table. For example, for a machine comprising a multifunction table, vacuum switches may be used to determine the hold-down force generated by the vacuum source by which the panel is held on the work table. In the case of a multifunction table having different vacuum zones (for example, what are known as "dynamic" vacuum zones), the signals of the vacuum switches associated with each zone of the multifunction table may be used, so that the panel hold-down force for each zone of the work table can be determined. More particularly, the information relating to the hold-down force by which the panel is held on the work table may be acquired by a sensor, or by a plurality of sensors, and such information may relate to each single zone of the multifunction table or be grouped into a single index representing the hold-down force by which the panel is held on the work table. Furthermore, the information relating to the hold-down force by which the panel is held on the work table may comprise information relating to the hold-down force by which the panel is held on the work table at a plurality of portions of the work table, and the working configuration of the machine is determined as a function of the plurality of parameters and of the tool position relative to the different portions of the work table.

This disclosure also provides a machine for machining wood.

In particular, according to the invention, the machine for machining wood may comprise a work table configured to support and hold down a panel to be machined. The machine may further comprise a suction system, configured to extract the shavings produced by the machine during machining of the panel and having a negative pressure flow rate. In particular, the machine may comprise a flow regulator, for regulating the negative pressure flow rate of the suction system, and a control unit connected to the regulator to control it. The control unit may be configured, (for example, by programming) to carry out the method according to this invention.

Furthermore, the suction system may comprise an external suction hood and an internal suction hood. The external hood may comprise a main top opening which is fluid-dynamically connectable to a negative pressure source, a main bottom opening and an outside wall extending between the main top opening and the main bottom opening to define a main suction chamber. The internal hood may comprise a secondary top opening which is fluid-dynamically connectable to a negative pressure source, a secondary bottom opening and an inside wall extending between the secondary top opening and the secondary bottom opening to define a secondary suction chamber. In a view along an operating axis, the outside wall and the inside wall may surround the chuck, and the main bottom opening surrounds the main bottom opening. The regulator may be configured to regulate a negative pressure flow rate of the external suction hood and/or a negative pressure flow rate of the internal suction hood. In particular, the regulator may comprise, for example, a main valve to regulate the flow rate of the external hood and a secondary valve to regulate the flow rate of the internal hood. Furthermore, the regulator may operate on a main duct and/or a secondary duct associated respectively with the external hood and the internal hood.

Preferably, according to the invention, the logic control unit may be configured to carry out the method described above for the negative pressure flow rate of the external hood and/or for the negative pressure flow rate of the internal hood.

This and other features will become more apparent from the following description of a preferred embodiment, illustrated purely by way of non-limiting example in the accompanying drawings, in which:
- Figure 1 shows a perspective view of a machine for machining wood according to the invention;
- Figure 2 shows a nesting cutting pattern of a panel to be machined;
- Figure 3 shows a perspective view of a detail of the machine for machining wood according to the invention;

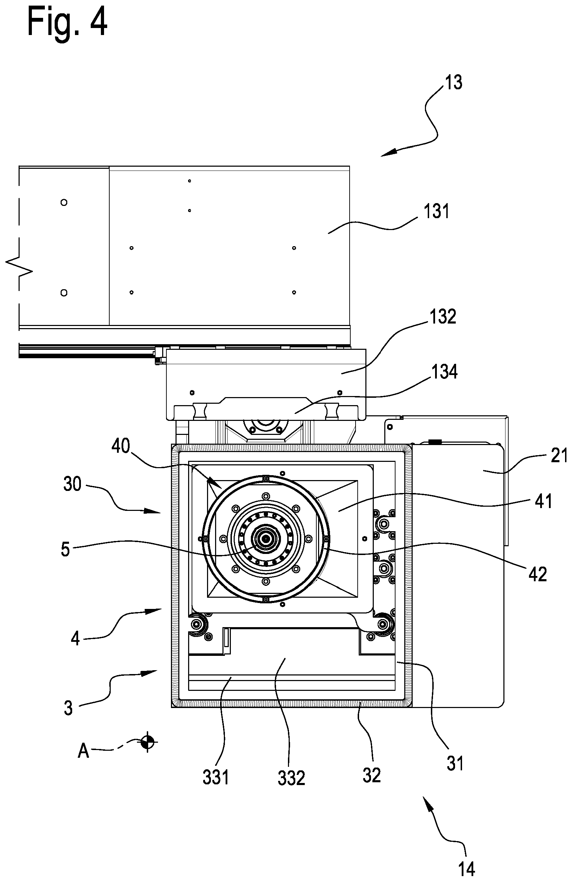

- Figure 4 shows a bottom view of the detail of the machine for machining wood according to the invention;
- Figure 5 shows a side view of the detail of the machine for machining wood in a first operating configuration;
- Figure 6 shows a side view of the detail of the machine for machining wood in a second operating configuration; and
- Figure 7 shows a flow diagram of the method according to the invention, for regulating a negative pressure flow rate in a machine for machining wood.

Hereinafter in this disclosure, directional terms such as "right", "left", "front", "rear", "top", "bottom", "upper", "lower", "lateral" etc. are used with reference to the accompanying drawings. Since components and/or elements and/or embodiments of this invention may be positioned and/or operated in several different orientations, the directional terms are used solely by way of non-limiting example.

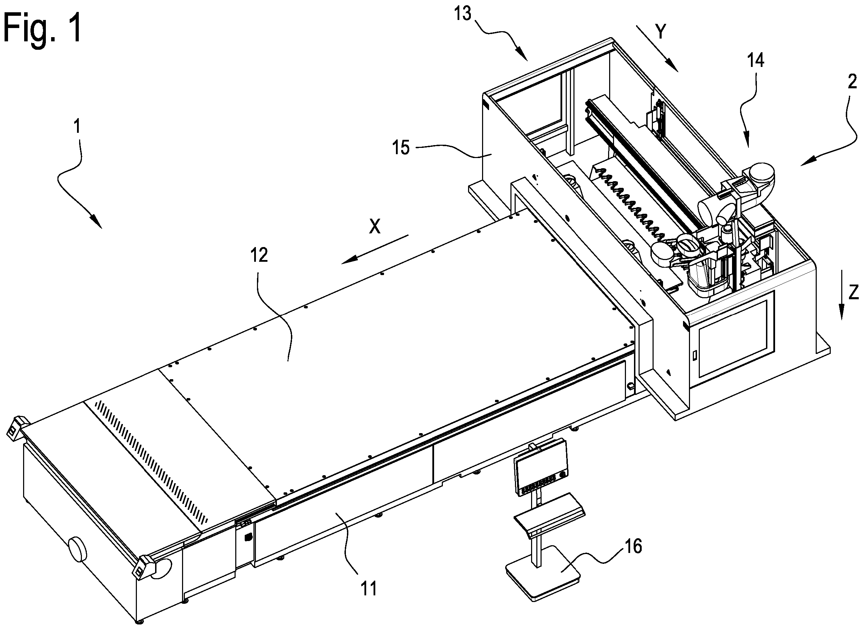

Figure 1 shows a machine 1 for machining wood, in particular, a nesting MC. The machine 1 has a bed 11 whose purpose is to support all the fixed and movable parts of the machine 1 itself.

Coupled to the bed 11 is an uninterrupted work table 12, also called multifunction table, made of aluminium, for example. The work table 12 is horizontal, that is to say, substantially parallel to the supporting surface of the bed 11, and extends along a longitudinal axis X and along a transverse axis Y. However, it should be borne in mind that the work table 12 might also be vertical or inclined (again with reference to the supporting surface of the bed 11), without departing from the scope of protection defined by the appended claims. The work table 12 has the purpose of supporting the panel to be machined. The work table 12 also has the purpose of firmly holding the panel P during machining operations carried out on the panel P itself. For that purpose, the work table 12 may be provided with holes, which may be open or closed, and which are fluid-dynamically connected, or coupled, to a vacuum pump, more specifically, a volumetric pump. The work table 12 may also be provided with grooves for inserting suitable gaskets acting in conjunction with the holes to define the areas of the work table 12 to which negative pressure is applied. On the work table there may be what is known as a "sacrificial" panel, whose purpose is to protect the work table 12 during operations which involve cutting through the panel P. The sacrificial panel may be made, for example, of MDF and is thus air permeable. The panel P is therefore held in place by the negative pressure which is generated by the vacuum pump and which passes through the sacrificial panel.

Coupled to the bed 11 is a movement system 13 whose purpose is to move a tool for machining the panel P along a triplet of orthogonal axes (Cartesian axes). In particular, the movement system 13 may comprise a crossbar 131 which extends along the transverse axis Y and is slidably coupled to the bed 11 so that it can be moved by a first actuator (for example, a synchronous brushless motor, or other type of actuator not shown in the drawings) along the longitudinal axis X, above the work table 12. The movement system 13 also comprises a transverse carriage 132 slidably coupled to the crossbar 131 so that it can be moved by a second actuator 133 (for example, a synchronous brushless motor, or other type of actuator not shown in the drawings) along the transverse axis Y, orthogonal to the longitudinal axis X. Furthermore, the movement system 13 comprises a vertical carriage 134 slidably coupled to the transverse carriage 132 so that it can be moved by a third actuator 135 (for example, a synchronous brushless motor, or other type of actuator not shown in the drawings) along the vertical axis Z, orthogonal to the longitudinal axis X and to the transverse axis Y.

The machine 1 comprises a machining unit 14 coupled to the vertical carriage 134. The machining unit comprises a chuck 5, in particular an electric chuck to support and rotationally drive a tool for machining the panel P. The tool, therefore, may be moved, in use, on the work table 12 along three Cartesian axes, in particular along the longitudinal axis X, the transverse axis Y and the vertical axis Z. However, it should be borne in mind that the machining unit 14 might also have one or more rotation axes, for example, a first rotation axis and a second rotation axis, so that the tool can be moved along a total of five axes, three linear axes and two rotary axes, while remaining within the scope of protection defined by the appended claims.

The movement system 13 and the machining unit 14 may be enclosed within a side panel 15, as shown for example in Figure 1. The side panel 15 has a safety function. In effect, the side panel 15 may incorporate safety systems (for example, comprising contact sensors or contactless sensors) to detect possible impacts between the movable parts of the machine 1 and an operator. Furthermore, the side panel has the purpose of preventing the operator from coming too close to the moving parts of the machine 1 or to dangerous parts, such as the chuck 5 or the tool. The side panel also has the purpose of intercepting parts of the machine 1, such as, for example, tool plates, which might accidentally come loose and be propelled at high speed towards an operator. The side panel 15 may be coupled to the movement system and moved as one therewith.

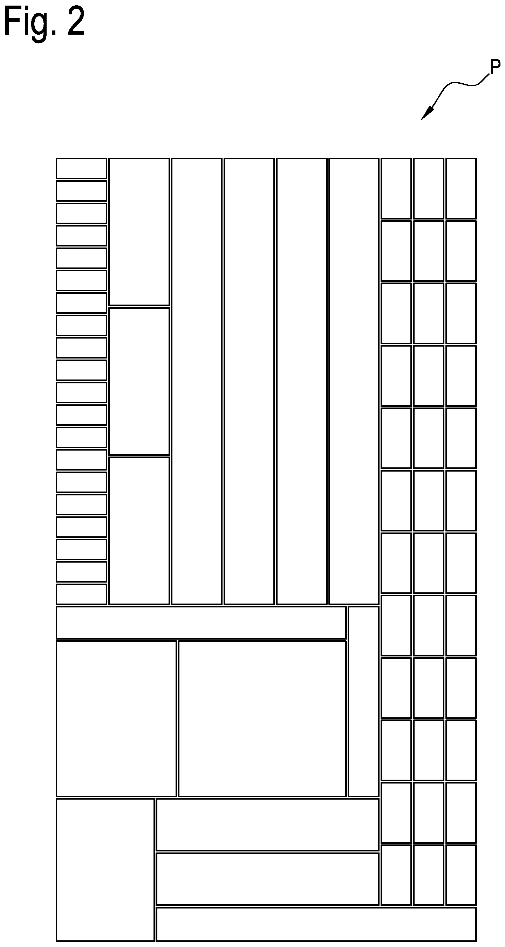

By moving along the vertical axis Z, the tool can move towards or away from the work table 12, hence from the panel to be machined. That way, it is also possible to define the depth the tools cut into the panel P to be machined. For nesting or panel sawing machining processes, the tool will be positioned at a predefined height over the panel P so that it cuts through the panel P itself. By so doing, the parts resulting from the machining process will be separated completely from the starting panel P. Figure 2 shows an example of a cutting pattern of a panel P to be machined. The specific example represented in Figure 2 is characterized by cuts which are orthogonal to each other and thus, we can also say that the panel P is sawn into a plurality of desired parts.

The machine 1 may have a control unit 16. The control unit 16 may comprise a PC (for example, industrial), a CNC and/or any electronic system, concentrated or distributed in the machine, to control the machine itself. A part of the control unit 16 may be positioned near an operator position which may comprise a workstation from where an operator can program and control the machine 1. Through the control unit 16, therefore, it is possible to program or load a machine program containing, for example, the cutting pattern shown in Figure 2, so that the machine 1 can automatically make the cuts in the panel P needed to obtain the desired parts, that is, to perform the desired machining process, using the tool driven in rotation by the chuck 5. The machine program may be generated by, or starting from, a CAD program. The machine program is then converted into a work program by a CAM program, thus obtaining the low-level instructions (for example in G-CODE) to control the machine so that it performs the desired process on the panel P. The desired parts are then separated from the panel P. There may be a multiplicity of parts made from the panel P and they may have any shape and size, within the limits of the initial size of the panel P.

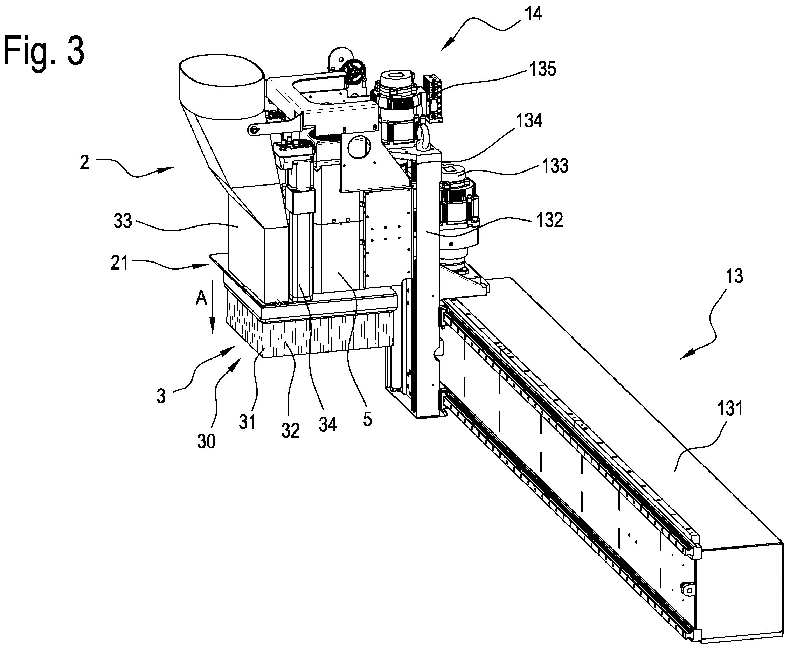

As shown in the detail illustrated in Figure 3, the machining unit 14 may comprise an extraction suction system 2, associated with the chuck 5, to extract the shavings produced by the tool during machining of the panel P. The extraction suction system 2 may move as one with the chuck and is therefore movable along the three orthogonal axes, in particular the longitudinal axis X, the transverse axis Y and the vertical axis Z.

The extraction suction system 2 may comprise an external suction hood 3. The external suction hood 3 may comprise a main duct 33 for extracting the shavings. The main duct 33 may be fluid-dynamically connected or coupled at one end of it to a negative pressure source, in particular, a vacuum pump, and more particularly, a centrifugal pump (or impeller). Typically, the centrifugal pump does not form part of the machine 1 but may form part of an external extraction system. The main duct 33 may comprise a valve 332 positioned and configured to regulate the flow inside the main duct 33. The valve 332 may, for example, be what is known as a "butterfly valve" having a rotating rod 331. The valve 332 may be driven, for example, by an actuator which may be, for example, a piston and related crank or an electric motor, for example coupled to the rod 331. The other end of the main duct 33 may be fluid-dynamically connected or coupled to a main top opening of the external hood 3. The main top opening may be an opening present in a plate 21 of the extraction suction system 2. The main top opening may have different shapes, for example rectangular or circular, and may be parallel to the work table 12. However, the top opening might also be, for example, orthogonal to the work table 12 or have different inclination angles, without thereby departing from the scope of protection afforded by the appended claims. Therefore, the plate 21 might also not be flat and not parallel to the work table 12.

The external hood 3 comprises an outside wall 31 which extends between the main top opening and a main bottom opening 30, in particular between the plate 21 and the main bottom opening 30.

Like the main top opening, the main bottom opening 30 may also have different shapes, for example rectangular or circular, and may or may not be parallel to the work table 12. In particular, the main bottom opening 30 allows the tool, which is surrounded by the outside wall 31, to freely access the panel P to be machined.

The shape and size of the outside wall 31 are such as to be able to surround the chuck 5, or at least part of it, and, if necessary, the tool, or at least part of it, so as to intercept, and extract the shavings by suction. The term "surround" is used generically to mean to "encircle" an object or "limit it all around".

The outside wall 31, the main top opening and the main bottom opening 30, or the outside wall 31, the plate 21, the main top opening and the main bottom opening 30 define a main suction chamber. The main suction chamber may, therefore, be in fluid-dynamic connection with the negative pressure source and for that reason, may contain a negative pressure whose purpose is to capture the shavings produced by the tool during machining of the panel P, and to extract the shavings by suction through the main duct 33 towards the outside of the machine 1 into a zone where the shavings are collected and stored.

The terms "top" and "bottom" are not intended to be limited to the geometric-spatial interpretation suggested by the examples shown in the drawings appended hereto.

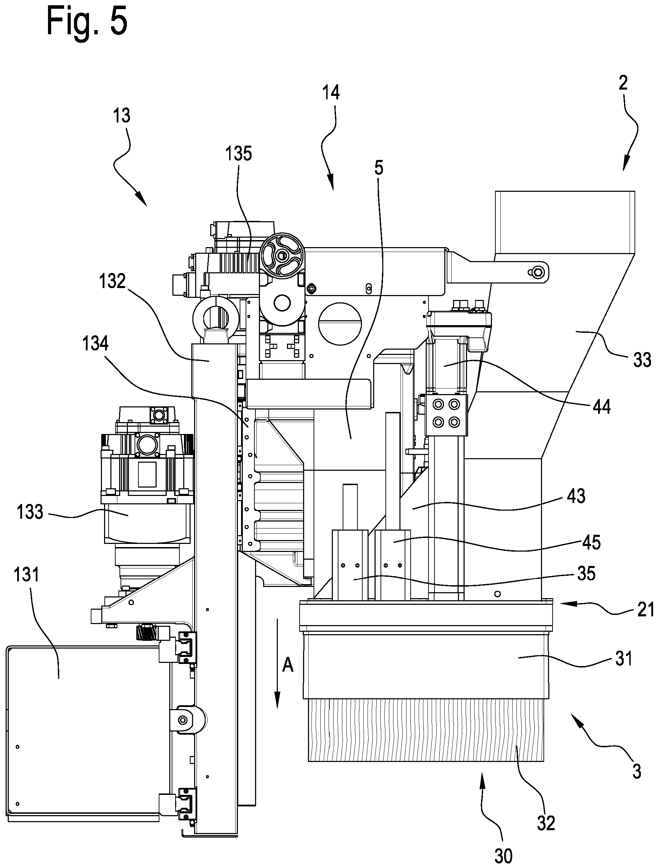

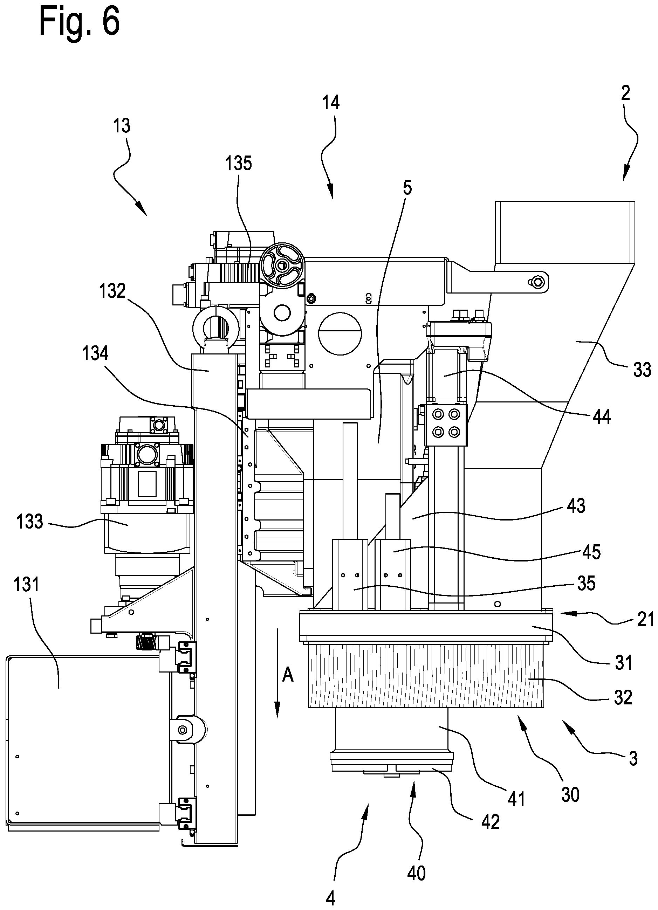

The outside wall 31 is movable relative to the machining unit 14, along an operating axis A, towards and away from the work table 12, that is, from the panel P to be machined, as shown, for example, in Figures 5 and 6. The operating axis A may, for example, be parallel to the vertical axis Z and may, in particular, be perpendicular to the work table 12. The outside wall 31, when raised relative to the work table 12, is at a non-operating position, and when lowered relative to the work table 12, is at an operating position.

The outside wall 31 may, for example, comprise a concertinaed portion. Figure 5 shows the outside wall 31 at the operating position with the concertinaed portion extended, while Figure 6 shows the outside wall 31 at the non-operating position with the concertinaed portion retracted. Besides a concertina system, other solutions are imaginable to make the outside wall 31 movable along the operating axis A: for example, a system of telescopic elements or elastic elements might be used. The movement of the outside wall 31 along the operating axis A is accomplished via a main actuator 34. The main actuator 34 may be, for example, an electric motor or a piston. In order to guide the movement of the outside wall 31, the extraction system 2 may comprise a main guide 35, such as, for example, a cylinder associated with a bushing, or an idle piston.

With reference to Figure 5, when the outside wall 31 is at the operating position, the external hood 3 may be operatively in contact with the panel P to be machined, closing the bottom of the main suction chamber with the panel P itself. In this configuration, the tool can machine the panel P and the external hood 3 can intercept and extract by suction the shavings produced during machining.

Furthermore, the outside wall 31 may comprise external brushes 32 (also called bristles) disposed along the perimeter of the main bottom opening 30. The external brushes 32 are configured to come into operative contact with the work table 12, that is, with the panel P to be machined. The external brushes 32 are preferably very long, so as to maximize the flexibility of the external hood 3.

The terms "raised" and "lowered" must be interpreted with reference to the movement "away from" and "towards" the work table 12, respectively.

The extraction suction system 2 may also comprise an internal suction hood 4. The internal suction hood 4 may comprise a secondary duct 43 for extracting the shavings. The secondary duct 43 may be fluid-dynamically connected or coupled at one end of it to a negative pressure source, in particular, a vacuum pump, and more particularly, a centrifugal pump (or impeller). Typically, the centrifugal pump does not form part of the machine 1 but may form part of an external extraction system. The negative pressure source may be distinct from that described for the external hood 3, or it may be the same source. The secondary duct 43 may comprise an additional valve positioned and configured to regulate the flow inside the secondary duct 43. The additional valve may, for example, be what is known as a "butterfly valve" having an additional rotating rod. The additional valve may be driven, for example, by an additional actuator which may be, for example, a piston and related crank or an electric motor, for example coupled to the additional rod. The other end of the secondary duct 43 may be fluid-dynamically connected or coupled to a secondary top opening of the internal hood 4. The secondary top opening may be an opening present in the plate 21 of the extraction suction system 2. The main secondary top opening may have different shapes, for example rectangular or circular, and may be parallel to the work table 12. However, the secondary opening might also be, for example, orthogonal to the work table 12 or have different inclination angles, without thereby departing from the scope of protection afforded by the appended claims. Therefore, the plate 21 might also not be flat and not parallel to the work table 12, as specified above in the description of the external hood 3.

The internal hood 4 comprises an inside wall 41 which extends between the secondary top opening and a secondary bottom opening 40, in particular between the plate 21 and the secondary bottom opening 40. Like the secondary top opening, the secondary bottom opening 40 may also have different shapes, for example rectangular or circular, and may or may not be parallel to the work table 12. In particular, the secondary bottom opening 40 allows the tool, which is surrounded by the inside wall 41, to freely access the panel P to be machined.

The shape and size of the inside wall 41 are such as to be able to surround the chuck 5, or at least part of it, and, if necessary, the tool, or at least part of it, so as to intercept, and extract the shavings by suction.

The inside wall 41, the secondary top opening and the secondary bottom opening 40, that is, the inside wall 41, the plate 21, the secondary top opening and the secondary bottom opening 40 define a secondary suction chamber. The secondary suction chamber may, therefore, be in fluid-dynamic connection with the negative pressure source and for that reason, may contain a negative pressure whose purpose is to capture the shavings produced by the tool during machining of the panel P, and to extract the shavings by suction through the secondary duct 43 towards the outside of the machine 1 into a zone where the shavings are collected and stored.

The inside wall 41 is movable relative to the machining unit 14, along the operating axis A, towards and away from the work table 12, that is, from the panel P to be machined, as shown, for example, in Figures 5 and 6. The inside wall 41, when raised relative to the work table 12, is at a non-operating position, and when lowered relative to the work table 12, is at an operating position.

The inside wall 41 may, for example, comprise a concertinaed portion. Figure 6 shows the inside wall 41 at the operating position with the concertinaed portion extended, while Figure 5 shows the inside wall 41 at the non-operating position with the concertinaed portion retracted. As in the case of the outside wall 31, besides a concertina system, other solutions are imaginable to make the inside wall 41 movable along the operating axis A: for example, a system of telescopic elements or elastic elements might be used. The movement of the inside wall 41 along the operating axis A is accomplished via a secondary actuator 44. The secondary actuator 44 may be, for example, an electric motor or a piston. In order to guide the movement of the inside wall 41, the extraction system 2 may comprise a secondary guide 45, such as, for example, a cylinder associated with a bushing, or an idle piston.

With reference to Figure 6, when the inside wall 41 is at the operating position, the internal hood 4 may be operatively in contact with the panel P to be machined, closing the bottom of the secondary suction chamber with the panel P itself. In this configuration, the tool can machine the panel P and the internal hood 4 can intercept and extract by suction the shavings produced during machining.

The inside wall 41 may comprise internal brushes 42 (also called bristles) disposed along the perimeter of the secondary bottom opening 40. The internal brushes 42 are configured to come into operative contact with the work table 12, that is, with the panel P to be machined. The internal brushes 42 are preferably very short compared to the external brushes 32, so as to maximize the efficiency of the internal hood 4.

With reference to Figure 3, in a view along an operating axis, in particular an operating axis perpendicular to the work table 12, which may coincide with the vertical axis Z and/or with the axis of rotation of the chuck, the outside wall 31 and the inside wall 41 may both surround the chuck 5. Further, the main bottom opening 30 of the external hood 3 may surround the secondary bottom opening 40 of the internal hood 4. In particular, the ratio between the area of the main bottom opening 30 and the area of the secondary bottom opening 40 may be, for example, greater than or equal to 3, in particular greater than or equal to 6. That way, it is clear that the external hood 3 may be configured to be able to surround at least a portion of the chuck and, if necessary, a tool of large size (where "large" is understood as being large compared to the tools normally used for boring or nesting, such as, for example, vertical milling cutters), with the result that it is particularly versatile but not very efficient. Furthermore, from these examples, it is clear that the internal hood 4 may be configured to be able to surround at least a portion of the chuck and, if necessary, a tool of reduced size (as, for example, the tools normally used for boring or nesting, such as vertical milling cutters), with the result that it is particularly efficient under equal conditions of energy consumption. Furthermore, the internal hood 4 may have a secondary bottom opening 40 which is, for example, less than or equal to 200 mm in size, in particular, less than or equal to 150 mm, and more particularly, less than or equal to 65 mm (which substantially coincides with the standard diameter of 63 mm tool tapers). The term "size" is used to mean a linear geometrical dimension of the secondary bottom opening 40 itself, such as, for example, a diameter (if it is circular in shape) or a length (width, or depth, if it is rectangular in shape). The size less than or equal to 200 mm, in particular, less than or equal to 150 mm, and more particularly, less than or equal to 65 mm, may have the advantage of making it easier to approach the tool holder during tool changing operations.

The external hood 3 and/or the internal hood 4 can move along an operating axis A, which may be, for example, parallel to the axis of rotation of the chuck, to the vertical axis Z of the machine 1 or perpendicular to the work table 12, between a non-operating position, where they are raised relative to the work table 12, and an operating position, where they are lowered. At the operating position, the external hood 3 and/or the internal hood 4 may be configured to be operatively in contact with, or supported by, the work table 12. Furthermore, the external hood 3 and the internal hood 4 may be at the non-operating position simultaneously so that an operator, for example, can easily carry out operations (for example, maintenance work) on the chuck 5 or on the tool.

Also, the external hood 3 may be at the operating position while the internal hood 4 is at the non-operating position, and vice versa, working alternately.

Furthermore, the external hood 3 and the internal hood 4 may be at the operating position simultaneously so as to create a joint suction effect around the tool. In this case, the two suction chambers, respectively of the external hood 3 and of the internal hood 4, can work jointly on the work table 12, around the chuck 5 and the tool, optimally distributing the flow generated by the negative pressure source. For this purpose, the extraction system 2 according to the invention may use, for example, the valve 332 or the additional valve, disposed and configured, where present, to vary the flow inside the main duct 33 and the secondary duct 43.

The secondary duct 43 may be fluid-dynamically coupled to the main duct 33 so as to be a deviation therefrom. For example, the fluid-dynamic (or even mechanical) coupling point between the secondary duct 43 and the main duct 33 may be upstream of the valve 332, with reference to the negative pressure source. By suitably adjusting the opening of the valve 332 and/or of the additional valve, it is possible, for example, to divide the suction between the external hood and the internal hood, to apply the suction entirely in the internal hood or in the external hood, or implement other suction logics to optimize the extraction of shavings by the suction system as a function, for example, of machining or other parameters.

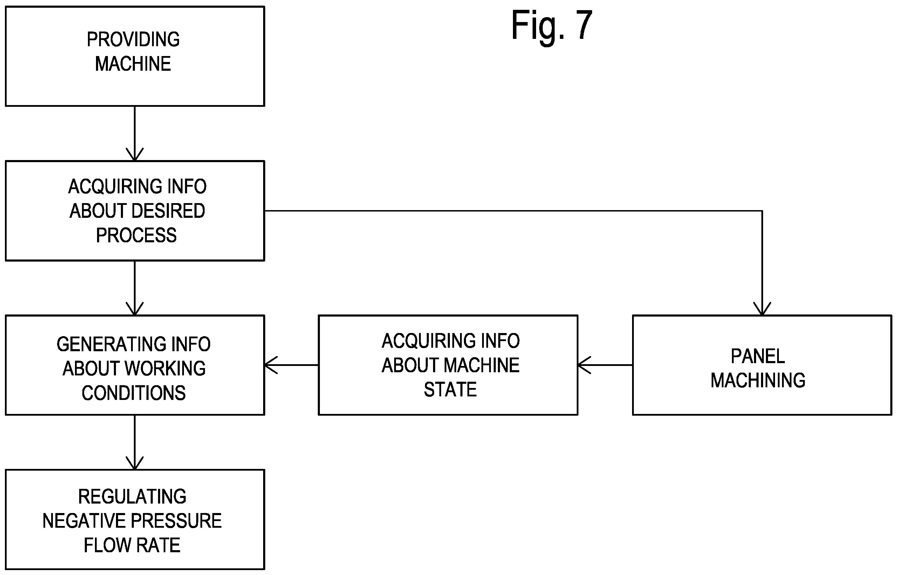

As shown, for example, in Figure 7, the method according to the invention may comprise providing the machine 1 with a work table 12 configured to support and hold down a panel P to be machined, a suction system 2 having a negative pressure flow rate and configured to extract the shavings produced by the machine 1 during machining of the panel P, a flow regulator V for regulating the negative pressure flow rate of the suction system 2, and a control unit 16 connected to the regulator V to control it.

The regulator V may comprise, for example, the valve 332 associated with the main duct 33, and the additional valve associated with the secondary duct 43, or both.

The operator may program or locally or remotely import a machine program, that is, a CAD drawing representing the desired machining process. The CAD drawing may comprise the cutting pattern. This is a step of acquiring information relating to the desired machining process. From said step, it is possible to acquire information such as, for example, the tool path, that is, a plurality of tool positions relative to the work table 12, the number of the plurality of parts to be separated from the panel P, the position of each part of the plurality of parts relative to the work table 12, all the dimensions of each part of the plurality of parts, the shape of each part of the plurality of parts, and/or the position of the tool relative to each part of the plurality of parts. Based on this information, the control unit 16 may generate information relating to a plurality of working conditions of the machine 1. In this example, the step of generating the information relating to a plurality of working conditions of the machine 1 may be carried out before machining. As we shall see in detail below, however, this step may be carried out before and/or during the step of machining. Such information relating to the plurality of working conditions may be used, during the machining of the panel P, to adjust the regulator V (for example, the valve 332 and/or the additional valve, if present). In particular, the information relating to the plurality of working conditions may be used, for example, to enter the G-CODE instructions for controlling the regulator V during machining of the panel P.

For example, with regard to the tool path, that is, the plurality of tool positions relative to the work table 12, when the tool is in proximity to the perimeter of the work table 12, the negative pressure flow rate of the suction system 2 could be reduced to prevent the parts from moving during machining because, along the perimeter of the work table 12, the hold-down force by which the panel P, or the part being machined, is held on the work table 12, could be lower. On the contrary, when the tool is in proximity to the centre of the work table 12, the negative pressure flow rate could be increased.

Furthermore, with regard to the number of the plurality of parts to be separated from the panel P, for example, once many parts of the plurality of parts have been separated, the hold-down force by which the panel P is held on the work table, is lower on account of the vacuum loss resulting from the cuts made on the panel P. Therefore, in this situation, it might be advantageous to reduce the negative pressure flow rate of the suction system 2 to prevent the parts still to be separated from moving when machined.

Additionally, with regard to the dimensions of each part of the plurality of parts, during the machining of a small part, that is a part with short sides or a main face having a small surface area, it might be a good idea to reduce the negative pressure flow rate of the suction system 2. In effect, parts of reduced size are held down by a lower force and, therefore, might move during machining if subjected to a high negative pressure flow rate when they are machined.

The shape of each part of the plurality of parts could also influence how firmly it is held down on the work table 12 when it is being machined. Therefore, in order to prevent the part from moving while it is being machined, it may be a good idea, in the case of some shapes, to reduce or increase the negative pressure flow rate of the suction system 2 when the part itself is being machined.

Furthermore, the position of the tool relative to each part of the plurality of parts when being machined could cause the part to vibrate, thus spoiling the quality of the machining process. For example, vibrations are possible towards the end of the machining process on the part, when it is about to be separated from the panel P, and so it may be advantageous to reduce the negative pressure flow rate of the suction system 2 so the part is held down more effectively on the work table 12.

In an example, again with reference to Figure 7, the state of the machine 1, that is, the configuration in which the machine 1 is working, may change during the machining of the panel P. In order to detect a state of the machine 1, different sensors may be used such as, for example, position sensors for the movable elements of the machine 1, safety sensors, flow sensors for detecting the flow rate of the fluid-dynamic circuits of the machine 1, temperature sensors for detecting the ambient temperature or the temperature of parts of the machine 1. In particular, according to the invention, the information relating to the state of the machine 1 may comprise information relating to the hold-down force by which the panel P is held on the work table 12. For example, for a machine 1 comprising a work table 12 of the multifunction type, a vacuum switch may be used to determine the hold-down force generated by the vacuum source by which the panel is held on the work table 12. In the case of a multifunction table having different vacuum zones (for example, dynamic vacuum zones), the signals of vacuum switches associated with each zone of the work table 12 may be used, so as to determine the hold-down force of the panel P for each zone of the work table 12. Based on the information relating to the state of the machine 1 detected, for example, by a sensor or a plurality of sensors, the control unit 16 may generate information relating to the plurality of working conditions of the machine. The information relating to the plurality of working conditions of the machine 1 may be generated, in particular, during the machining of the panel and may or may not be combined with the information relating to the plurality of working conditions of the machine 1 which may also have been generated by the control 16, based on the information relating to the desired machine process. The information relating to the plurality of working conditions of the machine 1 based on the state of the machine 1 may be used, for example, to enter the G-CODE instructions for controlling the regulator V during machining of the panel P, that is to say, they may be used, for example, as parameters within functions in instructions, for example, G-CODE instructions, for controlling the regulator V during machining of the panel P. Therefore, information relating to the plurality of working conditions of the machine 1 might be generated before and/or after machining of the panel P, in particular as a function of information relating to the desired machine process and/or as a function of information relating to the state of the machine 1.

This invention has been described by way of non-limiting illustration with regard to its preferred embodiments but it is understood that variants and/or modifications can be made by experts in the trade without thereby departing from the scope of protection afforded by the claims appended hereto.

## Claims

1. A method for regulating a negative pressure flow rate in a machine (1) for machining wood, the method comprising the following steps:
- providing the machine (1) with
a work table (12) configured to support and hold down a panel (P) to be machined;
a suction system (2), having the negative pressure flow rate and configured to extract the shavings produced by the machine (1) during machining of the panel (P);
a flow regulator (V) for regulating the negative pressure flow rate of the suction system (2); and
a control unit (16), connected to the regulator (V) to control it,
- via the control unit (16), generating information relating to a plurality of working conditions of the machine (1);
- under the control of the control unit (16), machining the panel (P);
- during machining of the panel (P) via the control unit (16), controlling the regulator (V) to regulate the negative pressure flow rate of the suction system (2) as a function of the information relating to the plurality of working conditions of the machine (1).

2. The method according to claim 1, wherein the method further comprises the following steps:
- via the control unit (16), acquiring information relating to a desired machine process to be performed on the panel (P),
and wherein the information relating to the plurality of working conditions of the machine (1) is generated as a function of the information relating to the desired machine process.

3. The method according to claim 2, wherein the information relating to the desired machine process comprises information regarding a plurality of tool positions relative to the work table (12), and wherein the information relating to the plurality of working conditions of the machine (1) is generated as a function of the plurality of tool positions relative to the work table (12).

4. The method according to claim 2 or 3, wherein the information relating to the desired machine process comprises information regarding a plurality of parts to be separated from the panel (P), and wherein the information relating to the plurality of working conditions of the machine (1) is generated as a function of the plurality of parts to be separated from the panel (P).

5. The method according to claim 4, wherein the information relating to the desired machine process comprises information regarding a size of a part of the plurality of parts to be separated from the panel (P), and wherein the information relating to a working condition of the plurality of working conditions of the machine (1) is generated as a function of the size of the part of the plurality of parts to be separated from the panel (P).

6. The method according to claim 4 or 5, wherein the information relating to the desired machine process comprises information regarding a shape of a part of the plurality of parts to be separated from the panel (P), and wherein the information relating to a working condition of the plurality of working conditions of the machine (1) is generated as a function of the shape of the part of the plurality of parts to be separated from the panel (P).

7. The method according to any one of claims 4 to 6, wherein the information relating to the desired machine process comprises information regarding a plurality of tool positions relative to a part of the plurality of parts to be separated from the panel (P), and wherein the information relating to a working condition of the plurality of working conditions of the machine (1) is generated as a function of the plurality of tool positions relative to the part of the plurality of parts to be separated from the panel (P).

8. The method according to any one of the preceding claims, further comprising the following step:
- during machining of the panel (P) via the control unit (16), acquiring information relating to a state of the machine (1);
and wherein the information relating to the plurality of working conditions of the machine (1) is generated as a function of the information relating to a state of the machine (1).

9. The method according to claim 8, wherein the information relating to the state of the machine (1) comprises information relating to the hold-down force by which the panel (P) is held on the work table (12).

10. The method according to claim 9, wherein the information relating to the hold-down force by which the panel (P) is held on the work table (12) is acquired via at least one sensor.

11. A machine (1) for machining wood, comprising:
a work table (12) configured to support and hold down a panel (P) to be machined;
a suction system (2), having a negative pressure flow rate and configured to extract the shavings produced by the machine (1) during machining of the panel (P);
a flow regulator (V) for regulating the negative pressure flow rate of the suction system (2); and
a control unit (16), connected to the regulator (V) to control it and configured to carry out the method according to any one of the preceding claims.

12. The machine (1) according to claim 10, wherein the suction system (2) comprises:
an external suction hood (3); and
an internal suction hood (4),
wherein the external suction hood (3) comprises:
a main top opening which is fluid-dynamically connectable to a negative pressure source;
a main bottom opening (30); and
an outside wall (31) which extends between the main top opening and the main bottom opening (30) to define a main suction chamber,
wherein the internal hood (4) comprises:
a secondary top opening which is fluid-dynamically connectable to a negative pressure source;
a secondary bottom opening (40); and
an inside wall (41) which extends between the secondary top opening and the secondary bottom opening (40) to define a secondary suction chamber,
wherein, in a view along an operating axis (A), the outside wall (31) and the inside wall (41) surround a chuck (5), and the main top opening (30) surrounds the secondary bottom opening (40),
wherein the regulator (V) is configured to regulate a negative pressure flow rate of the external suction hood (3) and/or a negative pressure flow rate of the internal suction hood (4),
and wherein the control unit (16) is configured to carry out the method according to any one of claims 1 to 8 to regulate the negative pressure flow rate of the external suction hood (3) and/or to regulate the negative pressure flow rate of the internal suction hood (4).
